# EUROPÄISCHE PATENTSCHRIFT

(11) **EP 2 619 771 B1**
(45) Veröffentlichungstag und Bekanntmachung des Hinweises auf die Patenterteilung: **01.11.2017**
(21) Anmeldenummer: 11785364.8
(22) Anmeldetag: 07.11.2011
(51) Int. Cl.: H01C 7/12, H02H 9/04

(54) **ÜBERSPANNUNGSABLEITER MIT DEHNBARER MANSCHETTE**
SURGE ARRESTER WITH EXTENDABLE COLLAR
DÉFLECTEUR DE SURTENSION À MANCHETTE EXTENSIBLE

(30) Priorität: 09.11.2010 DE 102010043655
(43) Veröffentlichungstag der Anmeldung: 31.07.2013
(73) Patentinhaber: Siemens Aktiengesellschaft, 80333 München (DE)
(72) Erfinder: SPRINGBORN, Dirk, 12203 Berlin (DE); PIPPERT, Erhard, 14624 Dallgow-Döberritz OT Seeburg (DE); SULITZE, Markus, 14612 Falkensee (DE)
(86) Internationale Anmeldenummer: PCT/EP2011/069527
(87) Internationale Veröffentlichungsnummer: WO 2012/062695

(56) Entgegenhaltungen:
- EP-A1- 0 280 189
- EP-A1- 0 280 189
- WO-A1-2006/000743
- WO-A1-2006/000743
- WO-A1-2009/050011
- WO-A1-2009/050011
- DE-A1-102008 057 232
- DE-A1-102008 057 232
- JP-A- 63 312 602
- JP-A- 63 312 602

## Beschreibung

Die Erfindung betrifft einen Überspannungsableiter mit einer Manschette zur Fixierung von Zugelementen, die dehnbar ist und so im Fehlerfall die freiwerdende Energie aufnehmen kann und den aus den Zugelementen bestehenden Käfig zusammenhält.

Überspannungsableiter sind Schutzsysteme für Stromversorgungssysteme, die bei auftretenden Überspannungen durch Blitzeinschlag oder Fehlfunktionen anderer Teilsysteme diese Überspannungen zur Masse hin ableiten und so andere Bauteile des Stromversorgungssystems schützen.

Ein derartiger Überspannungsableiter besteht aus einer zylindrischen Ableitersäule, die meist als Stapel aus einzelnen ebenfalls zylindrischen Varistorelementen gebildet wird. Varistorelemente zeichnen sich durch einen spannungsabhängigen Widerstand aus. Bei niedrigen Spannungen wirken diese als Isolatoren. Ab einer bestimmten Schwellenspannung, die materialabhängig ist, zeigen sie eine gute Leitfähigkeit. Häufig werden Varistorelemente aus Metalloxiden wie Zinkoxid hergestellt. Die Ableitersäule wird an ihren beiden Enden von Endarmaturen begrenzt, die den elektrischen Kontakt zum Stromversorgungssystem und zur Masse herstellen. Um einen guten elektrischen Kontakt auch unter mechanischer Belastung zu gewährleisten, müssen die Varistorelemente unter Druck zusammengehalten werden. Dies kann erfolgen, indem Zugelemente beispielweise Seile oder Stäbe vorzugsweise aus glasfaserverstärktem Kunststoff in den Endarmaturen unter Zug eingespannt werden. Die Zugelemente umgeben dabei die Ableitersäule und bilden so einen Käfig um diese. Zum Schutz gegen Umwelteinwirkungen sind solche Überspannungsableiter mit einem Gehäuse aus einen isolierenden Material wie zum Beispiel Silikon umgeben. Die Herstellung dieses Gehäuses kann durch Gießen oder Spritzen erfolgen.

Bei Überlast des Überspannungsableiters können sich die Varistorelemente explosionsartig ausdehnen. Der aus den Zugelementen gebildete Käfig soll auch dann noch die Ableitersäule zusammenhalten und verhindern, dass Bruchstücke der Varistorelemente herausgeschleudert werden.

Ein Problem bei solchen Überspannungsableitern besteht darin, zu verhindern, dass die Zugelemente in einem solchen Überlastfall durch die auftretende Explosionsenergie zerstört werden, oder dass der aus ihnen gebildete Käfig verformt wird, so dass Bruchstücke der Varistorelemente austreten können.

Die JP 63 312602 A zeigt einen Überspannungsableiter ohne weitere Vorrichtungen zum Schutz des Käfigs vor Verformung. In DE 101 04 393 C1 werden Stützplatten mit Ausnehmungen beschrieben, durch die die Zugelemente hindurchgeführt und so in einer Ebene senkrecht zur Längsachse des

Überspannungsabieiters fixiert werden. Die zugelemente können im Überlastfall an den Kanten der Stützplatten abgeschert werden. Die EP 0 280 189 A1 zeigt Stützplatten mit nach außen offenen Ausnehmungen für die Zugelemente, zwar einen gewissen Schutz vor tangentialer Verschiebung der Zugelemente bieten, aber keinen Schutz vor Verformung nach außen.

In US 5608597 A1 werden die Zugelemente mit einer Bandage aus glasfaserverstärktem Kunststoff umwickelt und somit fixiert. Die Bandagen sind aus glasfaserverstärktem Kunststoff hergestellt und somit nicht dehnbar. Zudem ist das oft verwendete Expoxidharz brennbar und kann sich im Überlastfall entzünden.

Aufgabe der vorliegenden Erfindung ist es demgegenüber einen Überspannungsableiter mit einer Manschette zur Fixierung der Zugelemente anzugeben, die verhindert, dass Zugelemente zerstört oder beschädigt werden.

Die Lösung der Aufgabe erfolgt mit dem eingangs angegebenen Überspannungsableiter dadurch, dass die Manschette am Äußeren der Ableitsäule des Überspannungsableiters anliegt und radiale Ausstülpungen aufweist, die die umfassten Zugelemente aufnehmen und in tangentialer Richtung bezogen auf die Mittelachse des Überspannungsableiters festlegen.

Die zwischen den Ausstülpungen liegenden Abschnitte der Manschette dienen als Verformungszonen. In diesen Abschnitten kann sich die Manschette aufweiten und so im Überlastfall Energie aufnehmen. Durch können die auf die Zugelemente wirkenden Kräfte insbesondere die an den Kanten der Manschette wirkenden Scherkräfte so weit reduziert werden, dass die Zugelemente nicht zerstört werden. Der aus den Zugelementen gebildete Käfig wird dadurch auch im Überlastfall zusammengehalten, so dass Bruchstücke der Varistorelemente nicht herausgeschleudert werden und andere Bauteile in der Nähe beschädigen können.

Die Manschette kann kostengünstig aus einem bandartigen Halbzeug beispielsweise aus Edelstahl durch Umformen hergestellt werden. Die dann zunächst offene Fixierungsmanschette kann dann vor oder während der Montage durch Verbindung ihrer beiden Enden beispielsweise durch Nieten, Schrauben, Schweißen oder Löten geschlossen werden.

In die Ableitsäule können zwischen zwei Varistorelementen zylindrische Zwischenstücke eingefügt werden. Diese können als Längenausgleich dienen, oder wenn für die Zwischenstücke leitfähiges Material verwendet wird, der besseren Kontaktierung der Varistorelemente dienen. Versieht man die Mantelfläche der Zwischenstücke mit Einbuchtungen in radialer Richtung, so kann die Manschette so gestaltet werden, dass zwischen den Ausstülpungen der Manschette liegende Einstülpungen sich in den Einbuchtungen an das Zwischenstück anschmiegen. Dadurch vergrößert sich die Verformungszone der Manschette, so dass sie eine höhere Dehnbarkeit aufweist und damit eine höhere Verformungsenergie aufnehmen kann. Außerdem liegen die inneren Abschnitte der Einstülpungen in Längsrichtung der Ableitsäule zwischen zwei Varistorelementen und werden so in Längsrichtung der Ableitsäule festgelegt.

In einer weiteren Ausbildung der Erfindung kann die Manschette aus mehreren Teilsegmenten bestehen. Das Zwischenstück weist hierbei in einer Deckfläche schlitzartige Ausnehmungen auf, die sich von einer Stelle der Mantelfläche zu einer weiteren Stelle der Mantelfläche erstrecken. Die Tiefe der schlitzartigen Ausnehmungen ist so bemessen, dass sie das Zwischenstück in seiner Dicke nicht durchdringt. Der innere Abschnitt der Teilsegmente der Manschette ist jeweils so geformt, dass sie in die schlitzartige Ausnehmung in Längsrichtung der Ableitsäule eingeschoben werden können. Die Ausstülpungen eines Teilsegmentes umfassen dabei nur einen Teil der Zugelemente. Beispielsweise kann in einer Ableitsäule mit acht Zugelementen die Manschette aus vier Teilsegmenten bestehen, von denen jedes zwei Zugelemente umfasst. Dadurch, dass die inneren Abschnitte der Teilsegmente in den schlitzartigen Ausnehmungen der Zwischenstücke aufgenommen sind, sind sie in radialer, tangentialer Richtung und in Längsrichtung bezogen auf die Mittelachse der Ableitsäule festgelegt. Auch wenn die Teilmanschetten im Überlastfall gedehnt und damit aufgeweitet werden, werden sie so trotzdem an ihrem Platz gehalten und können so den Käfig weiterhin zusammenhalten. In einer weiteren vorteilhaften Ausgestaltung können die Teilsegmente eine offene Form aufweisen. Die Enden der Teilsegmente sind derart geformt beispielsweise durch Umbiegen der Enden, dass entsprechend geformte Aufweitungen am innenliegenden Ende der schlitzartigen Ausnehmungen der Zwischenstücke die Enden der Teilsegmente aufnehmen und die Teilsegmente so festlegen. Durch die offene Form müssen die Teilsegmente nicht über die Enden der Zugelemente aufgefädelt werden, sondern können von außen in radialer Richtung auf die Zugelemente aufgeschoben und danach in Längsrichtung der Ableitsäule in die schlitzartigen Ausnehmungen eingeschoben werden, was eine Montage der Ableitsäule erheblich erleichtert.

Weitere Einzelheiten der Erfindung werden nachfolgend anhand der Zeichnung beschrieben. Gleiche oder sich entsprechende Zeichnungselemente sind in den einzelnen Figuren mit jeweils den gleichen Bezugszeichen versehen, wobei diese nur mehrfach erläutert werden, soweit sich Unterschiede zwischen den einzelnen Figuren ergeben. Es zeigen:
- Fig. 1: eine Schnittzeichnung eines Überspannungsableiters aus dem Stand der Technik,
- Fig. 2 bis 5: Ausführungsbeispiele für Manschetten von erfindungsgemäßen Überspannungsableitern in dreidimensionaler Darstellung.

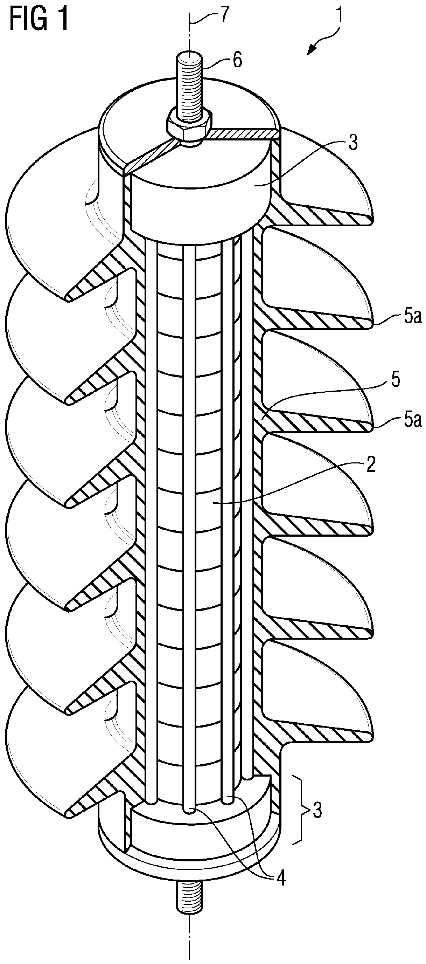

Die Fig. 1 zeigt einen herkömmlichen Überspannungsableiter 1 im sogenannten Käfig-Design mit einer aus mehreren Varistorelementen bestehenden Ableitsäule 2. Außer den Varistorelementen kann die Ableitsäule 2 noch weitere Elemente wie beispielsweise Metallblöcke (nicht dargestellt) zum Längenausgleich enthalten. Die Ableitsäule 2 wird an beiden Enden durch Endarmaturen 3 gehalten. Durch eine aus der Endarmatur 3 herausragende Gewindestange 6 kann der Überspannungsableiter in das Stromversorgungssystem eingebunden werden. Um die erforderliche mechanische Festigkeit beispielsweise gegen Biegebeanspruchung zu erreichen, werden in den Endarmaturen 3 außen um die Ableitsäule herum und parallel zur Mittelachse 7 des Überspannungsableiters liegende Zugelemente 4 eingespannt, die die Ableitsäule 2 unter Zug zusammenhalten. Diese Zugelemente 4 sind als Stäbe aus glasfaserverstärktem Kunststoff ausgeführt. Zum Schutz gegen Umwelteinflüsse ist der Überspannungsableiter mit einer äußeren Umhüllung 5 oft aus Silikon versehen. An der Außenseite der Umhüllung 5 sind Schirme 5a vorgesehen, um den Kriechweg des Stromes zu vergrößern.

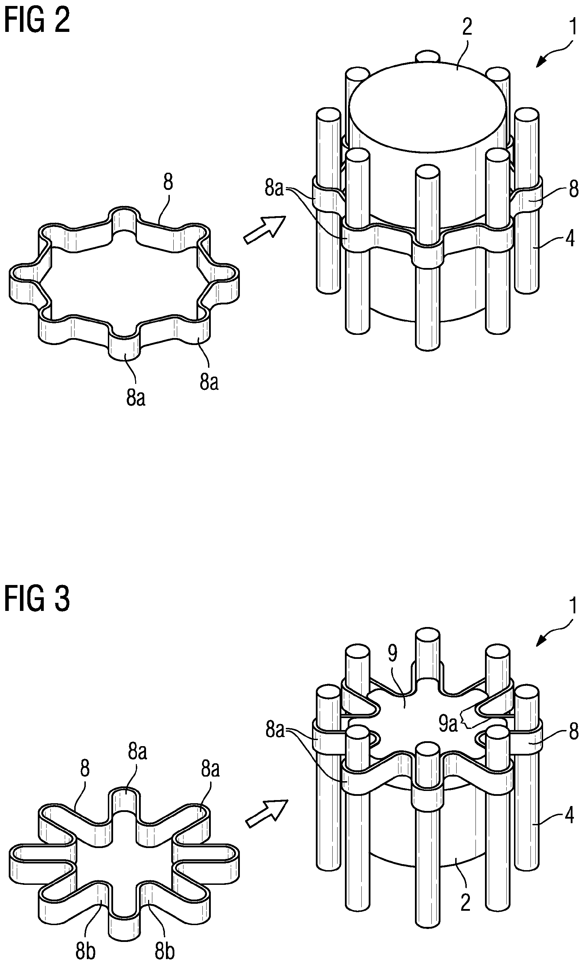

Fig. 2 zeigt einen radialen Schnitt durch einen Überspannungsableiter 1 ohne äußere Umhüllung mit einer erfindungsgemäßen dehnbaren Manschette 8. Die Manschette besitzt Ausstülpungen 8a, die die Zugelemente 4 aufnehmen. Die Manschette umfasst dabei die Zugelemente 4 in einer senkrecht zur Mittelachse 7 des Überspannungsableiters 1 liegenden Ebene. Die zwischen den Zugelementen liegenden Abschnitte der Manschette liegen am Äußeren der Ableitsäule 2 an. Die Manschette kann aus einem elektrisch leitfähigen Material beispielsweise aus Edelstahl aus einem bandartigen Halbzeug durch Umformen hergestellt werden. Die dann zunächst offene Manschette kann dann vor oder während der Montage durch Verbindung ihrer beiden Enden beispielsweise durch Nieten, Schrauben, Schweißen oder Löten geschlossen werden. Die zwischen den Ausstülpungen 8a der Manschette 8 liegenden Abschnitte der Manschette 8 dienen als Verformungszonen. In einem Überlastfall kann sich die Manschette in diesen Verformungszonen aufdehnen und so die entstehende Explosionsenergie teilweise aufnehmen.

Fig. 3 zeigt ein weiteres Ausführungsbeispiel einer erfindungsgemäßen Manschette 8. Hierbei sind in die Ableitsäule 2 zylinderförmige Zwischenstücke 9 eingefügt, von denen hier nur eins gezeigt ist. Die Zwischenstücke liegen dabei in Längsrichtung der Ableitsäule zwischen zwei Varistorelementen. Die Mantelfläche des Zwischenstückes weist radiale Einbuchtungen 9a auf. Die Manschette weist zwischen den Ausstülpungen 8a (die die Zugelemente 4 umfassen) liegende Einstülpungen 8b auf, die sich an die Einbuchtungen 9a des Zwischenstücks 9 anschmiegen. Die Einstülpungen 8b stellen die Verformungszonen dar, in denen sich die Manschette aufweiten kann. Gegenüber der Verformungszone des in Fig. 2 dargestellten Ausführungsbeispiels einer Manschette weisen diese aber einen größeren Verformungsbereich auf. Da die in die Einbuchtungen 9a des Zwischenstücks 9 greifenden Abschnitte der Einstülpungen 8b in radialer Richtung in den durch die Einbuchtungen des Zwischenstücks geformten Raum zwischen zwei Varistorelementen greifen, ist die gesamte Manschette in Längsrichtung der Ableitsäule festgelegt.

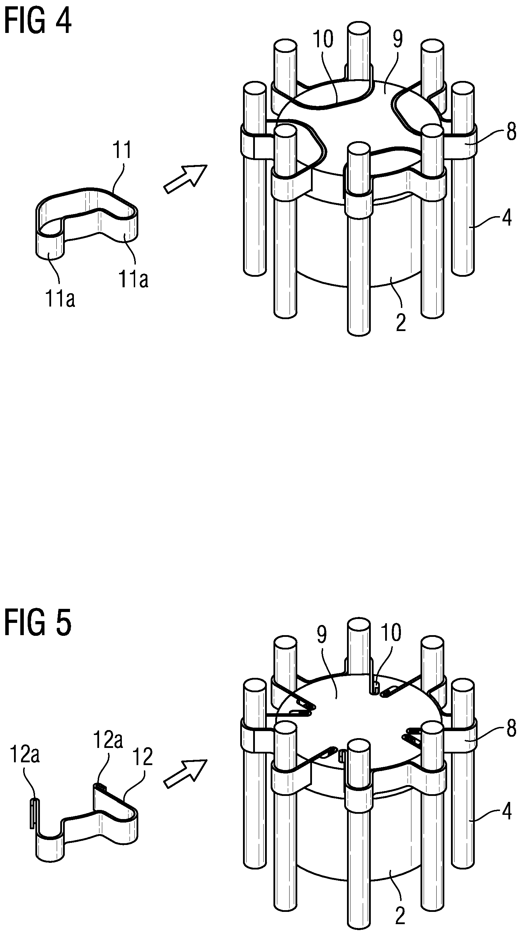

Fig. 4 zeigt ein weiteres Ausführungsbeispiel einer erfindungsgemäßen Manschette 8. Ein in die Ableitsäule 2 eingefügtes zylinderförmiges Zwischenstück 9 weist in einer Deckfläche schlitzartige Ausnehmungen 10 auf, die sich von einer Stelle der Mantelfläche zu einer weiteren Stelle der Mantelfläche erstrecken. Die Tiefe der schlitzartigen Ausnehmungen 10 ist geringer als die Dicke des Zwischenstücks 9. Die Manschette 8 besteht hier aus 4 gleichartigen Teilsegmenten 11. Für jedes der Teilsegmente 11 gibt es eine der schlitzartigen Ausnehmungen 10. Die Teilsegmente 11 weisen jeweils eine geschlossene Form auf. Die schlitzartigen Ausnehmungen 10 des Zwischenstücks 9 nehmen einen Abschnitt des Teilsegments auf und legen das Teilsegment 11 so in einer Querschnittsebene der Ableitsäule 2 fest. Die außerhalb der Ableitsäule 2 liegenden Ausstülpungen 8a der Teilsegmente 11 umfassen die Zugelemente 4.

Fig. 5 zeigt ein ähnliches Ausführungsbeispiel wie Fig.4. Auch hier besteht die Manschette 8 aus gleichartigen Teilsegmenten 12. Hier weisen die Teilsegmenten 12 jedoch eine offene Form auf. Ebenso ist in die Ableitsäule 2 ein zylinderförmiges Zwischenstück 9 eingefügt, das schlitzartige Ausnehmungen 10 in der Deckfläche aufweist, die jeweils zu einer Stelle in der Mantelfläche des Zwischenstücks 9 führen. Für jedes Teilsegment 12 gibt es zwei solcher schlitzartigen Ausnehmungen 10. Die schlitzartigen Ausnehmungen 10 können eine geringere Tiefe als die Dicke des Zwischenstücks 9 aufweisen, sie können das Zwischenstück 9 aber auch bis zur gegenüberliegenden Deckfläche durchdringen.

Die Enden 12a der Teilsegmente sind nach außen umgebogen, und passen in entsprechend geformte Aufweitungen am innenliegenden Ende der schlitzartigen Ausnehmungen 10. Die Teilsegmenten 12 können so zunächst oberhalb des Zwischenstücks 9 von außen über die Zugelemente 4 geschoben werden, danach kann das Teilsegment 12 entlang der Längsachse der Ableitsäule 2 in Richtung des Zwischenstücks 9 geschoben werden bis die Enden der Teilsegment in den schlitzartigen Ausnehmungen 10 aufgenommen sind. Die umgebogenen Enden der Teilsegmente 12a liegen dann in den Aufweitungen am innenliegenden Ende der schlitzartigen Ausnehmungen 10, so dass die Teilsegmente 12 in radialer Richtung festgelegt sind.

## Patentansprüche

1. Überspannungsableiter (1) mit einer an beiden Enden durch Endarmaturen (3) gehaltenen Ableitsäule (2), zumindest zwei in den Endarmaturen (3) in axialer Richtung eingespannten Zugelementen (4) und zumindest einer Manschette (8), die zumindest einen Teil der Zugelemente (4) in einer senkrecht zur Mittelachse (7) des Überspannungsableiters (1) liegenden Ebene derart umfasst, dass die umfassten Zugelemente (4) radial festgelegt sind,
**dadurch gekennzeichnet dass**
die Manschette (8) am Äußeren der Ableitsäule (2) anliegt und radiale Ausstülpungen (8a, 11a, 12a) aufweist, die die umfassten Zugelemente (4) aufnehmen und in tangentialer Richtung bezogen auf die Mittelachse (7) festlegen, wobei die Manschette (8) dehnbar ist und zwischen den Ausstülpungen (8a, 11a, 12a) angeordnete Verformungszonen ausbildet.

2. Überspannungsableiter (1) nach Anspruch 1,
**dadurch gekennzeichnet dass**
in zumindest einer Querschnittsebene der Ableitsäule (2) ein zylinderförmiges Zwischenstück (9) eingefügt ist, wobei die Mantelfläche des Zwischenstücks (9) radiale Einbuchtungen (9a) aufweist und zwischen den Ausstülpungen (8a, 11a, 12a) der Manschette (8) liegende Einstülpungen (8b) sich in den Einbuchtungen (9a) an das Zwischenstück (9) anschmiegen.

3. Überspannungsableiter (1) nach Anspruch 1,
**dadurch gekennzeichnet dass,**
in zumindest einer Querschnittsebene der Ableitsäule (2) ein zylinderförmiges Zwischenstück (9) eingefügt ist, dessen Deckfläche zur Mantelfläche führende, schlitzartige Ausnehmungen (10) aufweist, wobei die Manschette (8, 11, 12) aus mehreren gleichartigen Teilsegmenten (11, 12) besteht, und zur Mittelachse (7) der Ableitsäule (2) zeigende Abschnitte der Teilsegmente (11, 12) in die schlitzartigen Ausnehmungen (10) geschoben sind und dadurch die Teilsegmente (11, 12) in radialer Richtung festgelegt sind.

4. Überspannungsableiter (1) nach einem der Ansprüche 1 oder 2,
**dadurch gekennzeichnet dass**
die Manschette (8) eine geschlossene Form aufweist.

5. Überspannungsableiter (1) nach Anspruch 3,
**dadurch gekennzeichnet dass**
die Tiefe der schlitzartigen Ausnehmungen (10) geringer ist als die Dicke des Zwischenstücks (9), und die schlitzartigen Ausnehmungen (10) sich jeweils von einer Stelle der Mantelfläche des Zwischenstücks (9) zu einer weiteren Stelle der Mantelfläche des Zwischenstücks (9) erstrecken und die Teilsegmente (11, 12) eine geschlossene Form aufweisen, so dass die schlitzartige Ausnehmung (10) einen Abschnitt des Teilsegments (11, 12) aufnimmt und so in einer Querschnittsebene der Ableitsäule (2) festlegt.

6. Überspannungsableiter (1) nach Anspruch 3,
**dadurch gekennzeichnet dass**
die Teilsegmente (12) eine offene Form aufweisen und die Enden (12a) der Teilsegmente (12) derart geformt sind, dass entsprechend geformte Aufweitungen am innenliegenden Ende der schlitzartigen Ausnehmungen (10) der Zwischenstücke (9) die Enden (12a) der Teilsegmente (12) aufnehmen und die Teilsegmente (12) so festlegen.

## Claims

1. Surge arrester (1) having an arrester column (2) that is held at both ends by end fittings (3), at least two tensioning elements (4) that are clamped in the end fittings (3) in the axial direction and at least one collar (8) that encompasses at least one part of the tensioning elements (4) in a plane that lies in a perpendicular manner with respect to the center axis (7) of the surge arrester (1), in such a manner that the encompassed tensioning elements (4) are fixed in the radial direction, **characterized in that**
the collar (8) lies against the outside of the arrester column (2) and comprises radial protuberances (8a, 11a, 12a) that receive the encompassed tensioning elements (4) and fix said tensioning elements in the tangential direction with respect to the center axis (7), wherein the collar (8) is extendable and forms deformation zones that are arranged between the protuberances (8a, 11a, 12a).

2. Surge arrester (1) according to Claim 1,
**characterized in that**
a cylindrical intermediate piece (9) is inserted in at least a cross-sectional plane of the arrester column (2), wherein the peripheral surface of the intermediate piece (9) comprises radial recesses (9a) and depressions (8b) that lie between the protuberances (8a, 11a, 12a) of the collar (8) fit closely in the recesses (9a) in the intermediate piece (9).

3. Surge arrester (1) according to Claim 1,
**characterized in that**
a cylindrical intermediate piece (9) is inserted in at least a cross-sectional plane of the arrester column (2), the cover surface of which intermediate piece comprises slot-like cut-outs (10) that lead to the peripheral surface, wherein the collar (8, 11, 12) comprises a plurality of similar part segments (11, 12), and portions of the part segments (11, 12) that face towards the center axis (7) of the arrester column (2) are pushed into the slot-like cut-outs (10) and as a consequence the part segments (11, 12) are fixed in the radial direction.

4. Surge arrester (1) according to either of Claims 1 and 2, **characterized in that**
the collar (8) comprises a closed shape.

5. Surge arrester (1) according to Claim 3,
**characterized in that**
the depth of the slot-like cut-outs (10) is less than the thickness of the intermediate piece (9), and the slot-like cut-outs (10) extend in each case from one site of the peripheral surface of the intermediate piece (9) to a further site on the peripheral surface of the intermediate piece (9) and the part segments (11, 12) comprise a closed shape, so that the slot-like cut-out (10) receives a portion of the part segment (11, 12) and is thus fixed in a cross-sectional plane of the arrester column (2).

6. Surge arrester (1) according to Claim 3,
**characterized in that**
the part segments (12) comprise an open shape and the ends (12a) of the part segments (12) are shaped in such a manner that correspondingly shaped expanded areas on the inner-lying end of the slot-like cut-outs (10) of the intermediate pieces (9) receive the ends (12a) of the part segments (12) and thus fix the part segments (12).

## Revendications

1. Parafoudre (1) comprenant une colonne (2) de dérivation maintenue aux deux extrémités par des armatures (3) d'extrémité, au moins deux éléments (4) de traction encastrés dans la direction axiale dans les armatures (3) d'extrémité et au moins une manchette (8), qui entoure au moins une partie des éléments (4) de traction dans un plan perpendiculaire à l'axe (7) médian du parafoudre (1), de manière à fixer radialement les éléments (4) de traction entourés,
**caractérisé en ce que**
la manchette (8) s'applique à l'extérieur de la colonne (2) de dérivation et a des excroissances (8a, 11a, 12a) radiales, qui reçoivent les éléments (4) de traction entourés et les fixe, par rapport à l'axe (7) médian, dans la direction tangentielle, la manchette (8) étant extensible et constituant des zones de déformation disposées entre les excroissances (8a, 11a, 12a).

2. Parafoudre (1) suivant la revendication 1,
**caractérisé en ce que**,
dans au moins un plan de section transversale de la colonne (2) de dérivation, est insérée une pièce (9) intermédiaire en forme de cylindre, dans lequel la surface latérale de la pièce (9) intermédiaire a des bosses (9a) radiales rentrantes et des creux (8b), se trouvant entre les excroissances (8a, 11a, 12a) de la manchette (8), s'adaptent à la pièce (9) intermédiaire dans les bosses (9a) rentrantes.

3. Parafoudre (1) suivant la revendication 1,
**caractérisé en ce que**,
dans au moins un plan de section transversale de la colonne (2) de dérivation, est insérée une pièce (9) intermédiaire en forme de cylindre, dont la surface supérieure a des évidements (10) en forme de fente menant à la surface latérale, la manchette (8, 11, 12) étant constituée de plusieurs segments (11, 12) partiels de même type et des tronçons, tournés vers l'axe (7) médian de la colonne (2) de dérivation, des segments (11, 12) partiels, sont glissés dans les évidements en forme de fente et les segments (11, 12) partiels sont ainsi fixés dans la direction radiale.

4. Parafoudre (1) suivant l'une des revendications 1 ou 2, **caractérisé en ce que**,
la manchette (8) a une forme fermée.

5. Parafoudre (1) suivant la revendication 3,
**caractérisé en ce que**,
la profondeur des évidements (10) en forme de fente est plus petite que l'épaisseur de la pièce (9) intermédiaire et les évidements (10) en forme de fente s'étendent d'un point de la surface latérale de la pièce (9) intermédiaire à un autre point de la surface latérale de la pièce (9) intermédiaire et les segments (11, 12) partiels ont une forme fermée, de sorte que l'évidement (10) en forme de fente reçoit un tronçon du segment (11, 12) partiel et le fixe ainsi dans un plan de la section transversale de la colonne (2) de dérivation.

6. Parafoudre (1) suivant la revendication 3,
**caractérisé en ce que**,
les segments (12) partiels ont une forme ouverte et les extrémités (12a) des segments (12) partiels sont conformées de manière à ce que, conformément à des élargissements conformés de manière adéquate à l'extrémité vers l'intérieur des évidements (10) en forme de fente, des pièces (9) intermédiaires reçoivent les extrémités (12a) des segments (12) partiels et fixent ainsi les segments (12) partiels.
